# EUROPEAN PATENT SPECIFICATION

(11) **EP 4 043 645 B1**
(45) Date of publication and mention of the grant of the patent: **26.02.2025**
(21) Application number: 20890154.6
(22) Date of filing: 05.11.2020
(51) Int. Cl.: E02F 9/24, E02F 9/26, H04N 7/18

(54) **ROAD SURFACE CONDITION MONITORING SYSTEM, WORK VEHICLE, ROAD SURFACE CONDITION MONITORING METHOD, AND PROGRAM**
SYSTEM ZUR ÜBERWACHUNG DES ZUSTANDS VON STRASSENOBERFLÄCHEN, ARBEITSFAHRZEUG, VERFAHREN ZUR ÜBERWACHUNG DES ZUSTANDS VON STRASSENOBERFLÄCHEN UND PROGRAMM
SYSTÈME DE SURVEILLANCE D'ÉTAT DE SURFACE DE ROUTE, ENGIN DE CHANTIER, PROCÉDÉ DE SURVEILLANCE D'ÉTAT DE SURFACE DE ROUTE ET PROGRAMME

(30) Priority: 21.11.2019 JP 2019210857
(43) Date of publication of application: 17.08.2022
(73) Proprietor: Komatsu Ltd., Minato-ku Tokyo 107-8414 (JP)
(72) Inventor: MURAKAMI Yuya, Tokyo 107-8414 (JP); ONO Masanori, Tokyo 107-8414 (JP)
(74) Representative: Grünecker Patent- und Rechtsanwälte PartG mbB
(86) International application number: PCT/JP2020/041308
(87) International publication number: WO 2021/100469

(56) References cited:
- EP-A1- 3 287 333
- JP-A- 2016 170 598
- JP-A- 2016 170 598
- JP-A- 2016 203 836
- JP-A- 2019 192 157
- JP-A- 2019 192 157

## Description

### [Technical Field]

The present invention relates to a road surface condition monitoring system, a work vehicle, a road surface condition monitoring method, and a program.

Priority is claimed on Japanese Patent Application No. 2019-210857, filed November 21, 2019.

### [Background Art]

A wheel loader operating in a mine and a quarry perform excavation work of a blasting rock and the like. During such work, for example, a tire may come into contact with a sharp rock and cause tire damage. A tire damage is, for example, scratching or puncturing a tire. Although an operator allows the wheel loader to travel while checking whether there is any rock on a road surface which may cause the tire damage, it is difficult to visually recognize a condition of the road surface from an operator's seat in some cases. Therefore, in a work vehicle disclosed in Patent Document 1, a road surface condition in front of a front tire is imaged by a camera installed in front of a front accelerator, and the operator can check the road surface condition by a monitor provided in a cab.

Patent Document 2 describes a vehicle operation management device for a vehicle, in particular, a mine transport vehicle. The system has the capability of detecting a contact between a tire of the vehicle and an object on the road such as a stone. In particular, in case of a collision between the vehicle and the object, it is determined whether or not the object may damage a tire. The determination is based on a contact waveform including collision peak data.

Patent Document 3 describes an operation system for a transport vehicle such as mine vehicle (dump truck). The system is capable of determining a contact between a tire of the vehicle and an obstacle on the road, which may potentially cause damage and thus reduce the life-cycle of tires, and record respective information. For this purpose, the system is equipped with front cameras such as a stereo camera system.

Patent Documents 2 and 3 thus describe systems for detecting a contact between a tire of a vehicle and an obstacle and determining whether this may cause damage, after the contact.

Patent Document 4 describes a tire pattern determination device and a vehicle type determination device, in particular, for toll collection facilities. A toll booth system includes inter alia a tire pattern determination device capable of determining a tire pattern from passing by vehicles.

### [Citation List]

### [Patent Document]

[Patent Document 1]
   PCT International Publication No. WO2017/077723
[Patent Document 2]
   Japanese Patent Application Publication No. JP 2019-192157 A
[Patent Document 3]
   European Patent Application Publication EP 3 287 333 A1
[Patent Document 4]
   Japanese Patent Application Publication JP 2016-170598 A

### [Summary of Invention]

### [Technical Problem]

According to the work vehicle disclosed in Patent Document 1, the operator can visually recognize whether a rock causing the tire damage exists in a traveling direction by viewing the monitor. However, in this configuration, it is first necessary for the operator to visually recognize a rock causing the tire damage on the monitor regardless of the presence or absence of a rock to be paid attention for the tire damage, and the tire damage can be avoided only when the operator can determine whether or not the visually recognized rock is likely to cause the tire damage. During excavation work, the operator's line of sight is forward, and there is a problem that it is difficult for the operator to keep viewing the monitor always. In addition, when the frequency of looking the monitor is increased, the operation of the work vehicle becomes slow and the productivity is lowered.

The present invention has been made in view of the above circumstances, and an object of the present invention is to provide a road surface condition monitoring system, a work vehicle, a road surface condition monitoring method, and a program which enable an operator to easily monitor a road surface condition.

### [Solution to Problem]

This is achieved by the features of the independent claims.

### [Advantageous Effects of Invention]

According to the aspect of the present invention, the operator can easily monitor the road surface condition.

### [BRIEF DESCRIPTION OF DRAWINGS]

Fig. 1 is a perspective view showing an example of a work vehicle according to the present embodiment.
Fig. 2 is a side view of a wheel loader 1 shown in Fig. 1.
Fig. 3 is a side view of the wheel loader 1 shown in Fig. 1.
Fig. 4 is a front view of the wheel loader 1 shown in Fig. 3.
Fig. 5 is a view of the wheel loader 1 shown in Fig. 3 as viewed from diagonally below.
Fig. 6 is a perspective view of a tire 6 shown in Fig. 1.
Fig. 7 is a schematic diagram showing an imaging region of a camera according to the present embodiment.
Fig. 8 is a block diagram showing an example of a road surface condition monitoring system according to the present embodiment.
Fig. 9 is a flowchart showing an operation example of a road surface condition monitoring system 100 shown in Fig. 8.
Fig. 10 is a schematic diagram showing an example of an image for learning according to the present embodiment.
Fig. 11A is a schematic diagram showing an example of a camera image according to the present embodiment.
Fig. 11B is a schematic diagram showing an example of a camera image according to the present embodiment.
Fig. 12 is a block diagram showing a basic configuration example of an embodiment of the present invention.

### [DESCRIPTION OF EMBODIMENTS]

Hereinafter, embodiments of the present invention will be described with reference to the drawings. In the drawings, the same or corresponding configurations are represented by the same reference numerals, and description thereof will not be repeated.

### [Wheel Loader (Work Vehicle)]

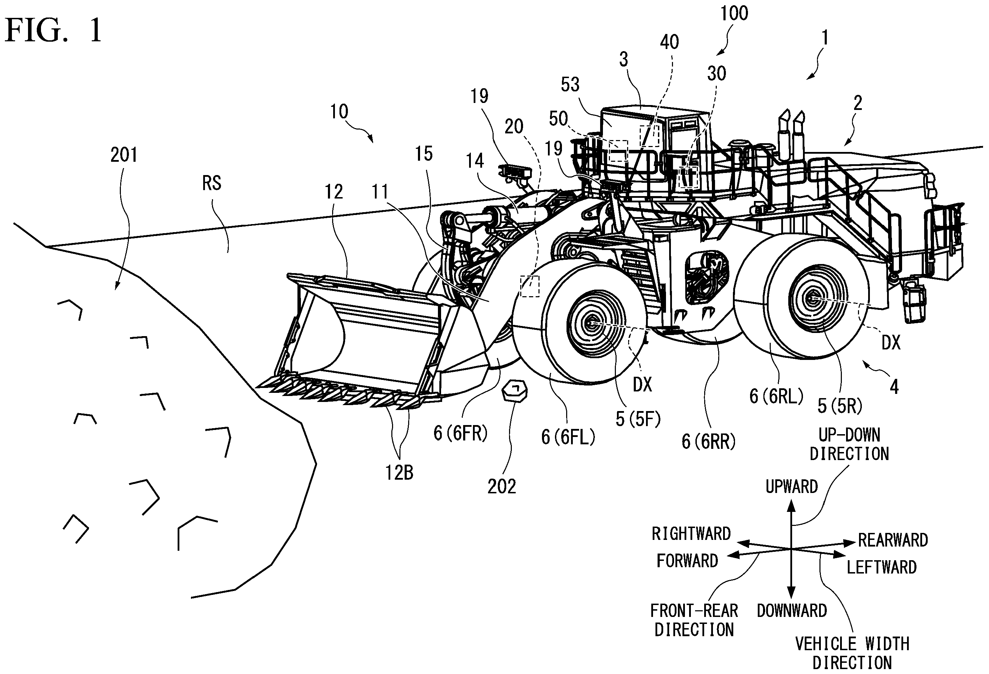

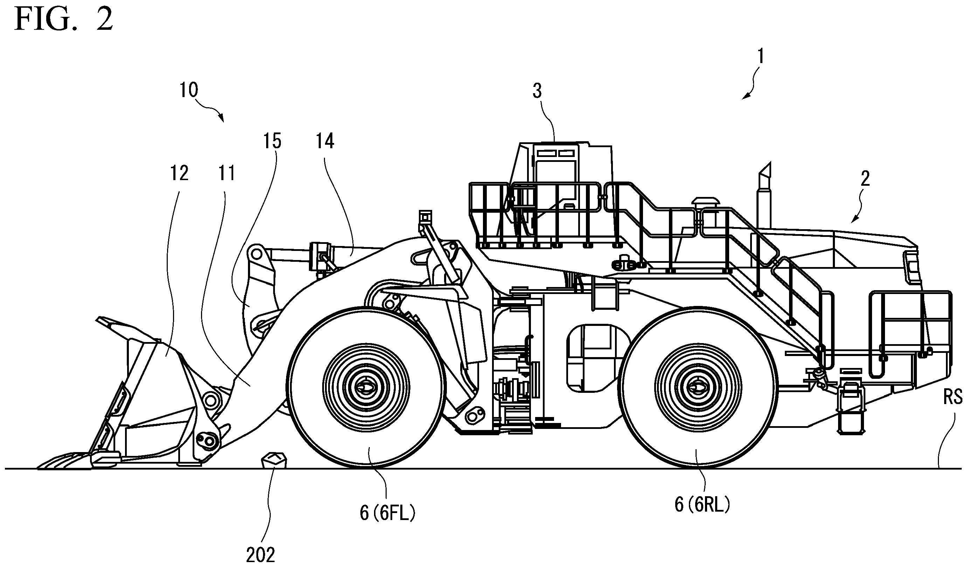

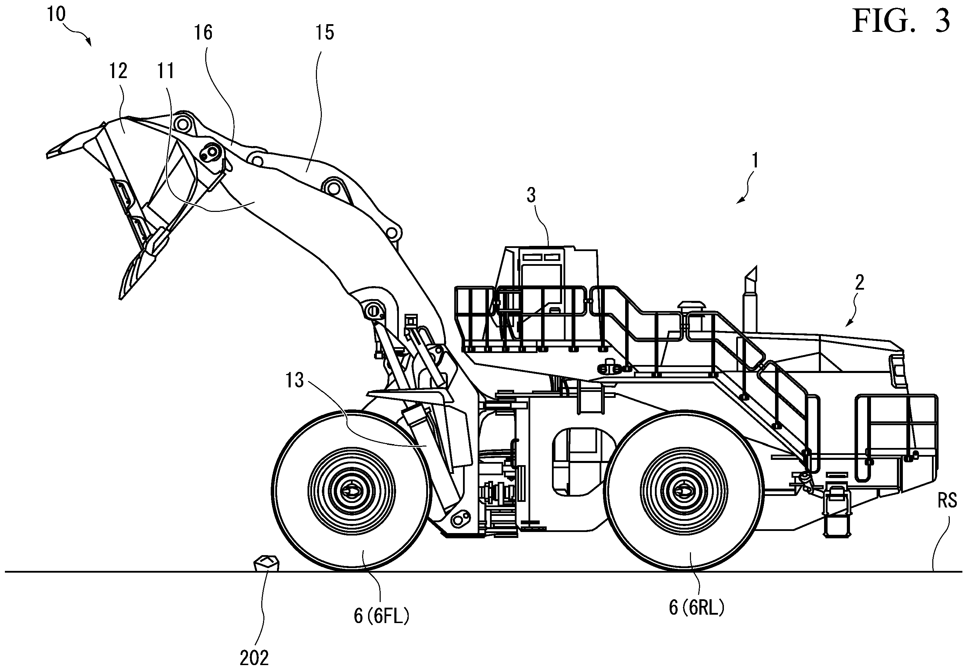

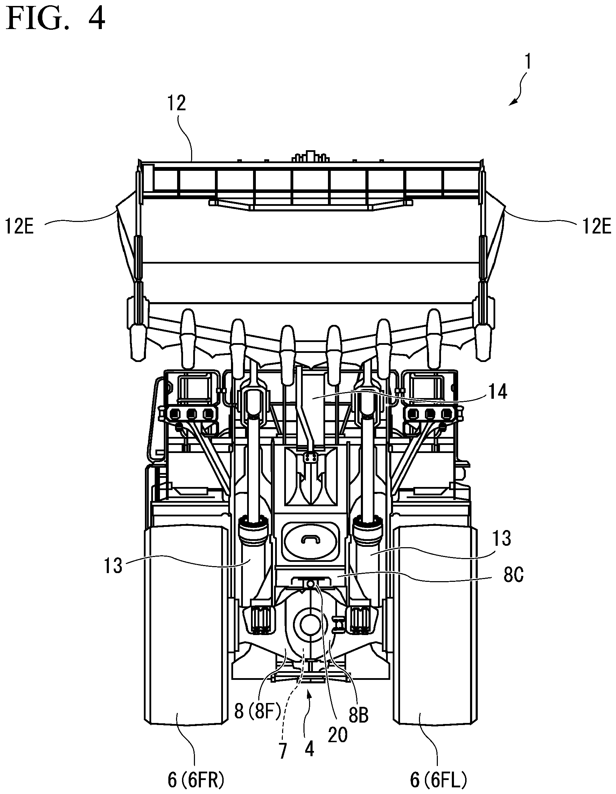

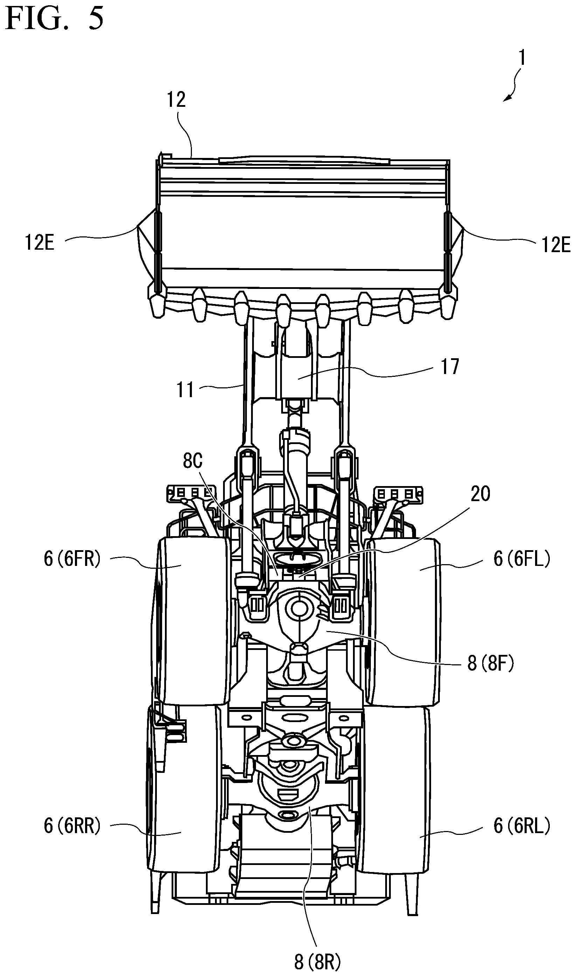

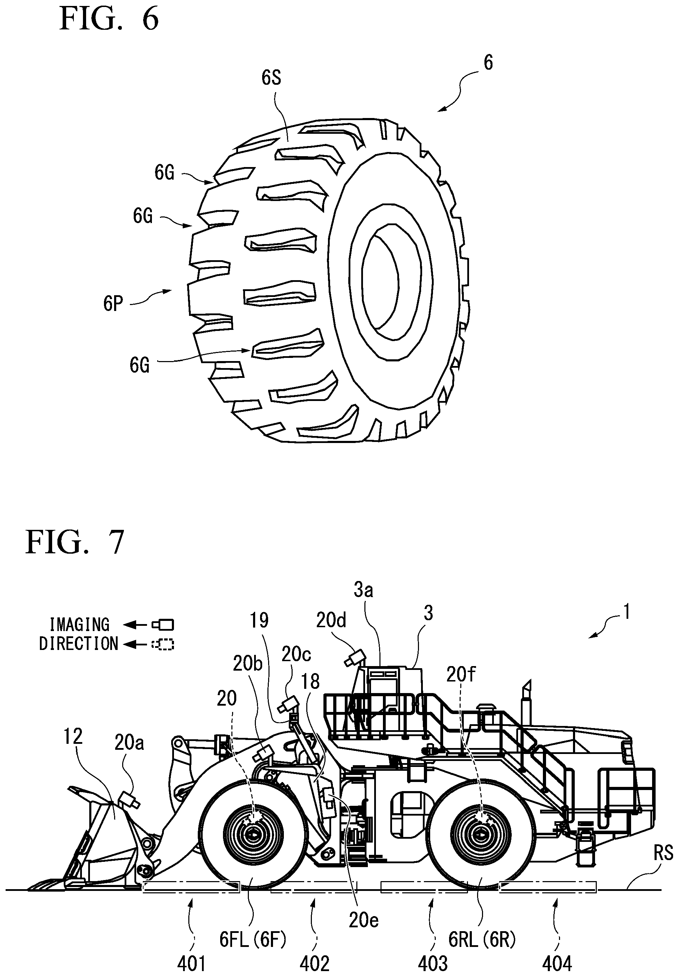

Fig. 1 is a perspective view showing a wheel loader 1 as an example of a work vehicle according to the present embodiment. Fig. 2 is a side view of the wheel loader 1 shown in Fig. 1. Fig. 3 is a side view of the wheel loader 1 (when a bucket 12 is moved upward) shown in Fig. 1. Fig. 4 is a front view of the wheel loader 1 shown in Fig. 3. Fig. 5 is a view of the wheel loader 1 shown in Fig. 3 as viewed from diagonally below. Fig. 6 is a perspective view of a tire 6 shown in Fig. 1. Fig. 7 is a schematic diagram showing an imaging region of a camera according to the present embodiment.

As shown in Fig. 1 and the like, the wheel loader 1 includes a vehicle body 2 and work equipment 10 supported by the vehicle body 2. Fig. 1 schematically shows a rock pile 201, which is a work object of the wheel loader 1, and a rock 202, which is located away from the rock pile 201 and has a possibility of damaging the tire 6.

The vehicle body 2 has a cab 3, a traveling mechanism 4, and an engine (not shown) that generates power for driving the traveling mechanism 4. The cab 3 is provided with a driver's seat (not shown). The wheel loader 1 is operated by an operator who is seated in the driver's seat in the cab 3. A driving operation device operated by the operator is disposed around the driver's seat. The driving operation device includes, for example, a shift lever, an accelerator pedal, a brake pedal, and a work equipment lever for operating the work equipment 10. The operator operates the driving operation device, to control the traveling speed of the wheel loader 1, switch between forward and reverse, and operate the work equipment 10.

The traveling mechanism 4 has wheels 5 that can rotate around a rotating shaft DX. The tire 6 is mounted on each of the wheels 5. The wheels 5 include two front wheels 5F and two rear wheels 5R. The tires 6 include a right front tire 6FR and a left front tire 6FL mounted on the front wheels 5F, and a right rear tire 6RR and a left rear tire 6RL mounted on the rear wheels 5R. In the following, the right front tire 6FR and the left front tire 6FL may be collectively referred to as a front tire 6F, and the right rear tire 6RR and the left rear tire 6RL may be collectively referred to as a rear tire 6R. The traveling mechanism 4 can travel on a road surface RS.

In the following description, a direction parallel to the rotating shaft DX when the wheel loader 1 travels in a straight advancing state is appropriately referred to as a vehicle width direction of the vehicle body 2, a direction parallel to the vertical axis orthogonal to the road surface RS is appropriately referred to as an up-down direction of the vehicle body 2, and a direction orthogonal to both the rotating shaft DX and the vertical axis is appropriately referred to as a front-rear direction of the vehicle body 2.

The tire 6 has, for example, a block pattern (also referred to as a tread pattern) 6P as shown in Fig. 6. The block pattern 6P is a pattern formed of a groove 6G or the like carved in a tread 6S which is a portion where the tire 6 is in contact with the road surface RS. In the example shown in Fig. 6, the block pattern 6P is a pattern (lug type pattern) in which a plurality of the grooves 6G are alternately carved on the left and right at substantially right angles to a circumferential direction of the tire 6.

In the present embodiment, the direction in which the work equipment 10 is present is the front, and the opposite direction to the front is the rear, with respect to the operator who is seated in the driver's seat of the cab 3. One in the vehicle width direction is the right, and the opposite direction to the right is the left. The front wheels 5F are disposed in front of the rear wheels 5R. The front wheels 5F are disposed on both sides of the vehicle body 2 in the vehicle width direction. The rear wheels 5R are disposed on both sides of the vehicle body 2 in the vehicle width direction.

The work equipment 10 has an arm 11 movably connected to the vehicle body 2, a bucket 12 which is an excavation member movably connected to the arm 11 via a link 16, and a bell crank 15.

The arm 11 is operated by power generated by a lift cylinder 13 (Fig. 3). The lift cylinder 13 is a hydraulic cylinder that generates power for moving the arm 11. One end portion of the lift cylinder 13 is connected to the vehicle body 2, and the other end portion of the lift cylinder 13 is connected to the arm 11. Two lift cylinders 13 are provided. One lift cylinder 13 is provided on the right side of the center in the vehicle width direction, and the other lift cylinder 13 is provided on the left side of the center in the vehicle width direction. When the operator operates the work equipment lever, the lift cylinder 13 expands and contracts. As a result, the arm 11 moves in the up-down direction.

The bucket 12 is an excavation member having teeth 12B. The excavation member may be a blade having a blade edge. The bucket 12 is connected to a tip portion of the arm 11 and is connected to the vehicle body 2 via the arm 11. The bucket 12 is operated by power generated by a bucket cylinder 14. The bucket cylinder 14 is a hydraulic cylinder that generates power for moving the bucket 12. A central portion of the bell crank 15 is rotatably connected to the arm 11. One end portion of the bucket cylinder 14 is connected to the vehicle body 2, and the other end portion of the bucket cylinder 14 is connected to one end portion of the bell crank 15. The other end portion of the bell crank 15 is connected to the bucket 12 via the link 16 (Fig. 3). One bucket cylinder 14 is provided. The bucket cylinder 14 is disposed at the center in the vehicle width direction. When the operator operates the work equipment lever, the bucket cylinder 14 expands and contracts. As a result, the bucket 12 swings. The bucket 12 swings in front of the vehicle body 2.

As shown in Figs. 4 and 5, end portions 12E on both sides of the bucket 12 in the vehicle width direction are disposed outside the tire 6 in the vehicle width direction. That is, a distance in the vehicle width direction between the right end portion 12E and the left end portion 12E of the bucket 12 is larger than a distance in the vehicle width direction between an outer surface of the right tire 6 and an outer surface of the left tire 6.

Fig. 4 is a front view showing the wheel loader 1 according to the present embodiment, and shows a state in which the bucket 12 is moved upward. In the present embodiment, the traveling mechanism 4 has a power transmission mechanism 7 that transmits the power generated by the engine to the front wheels 5F, and a housing 8 (also referred to as an axle case) that houses at least part of the power transmission mechanism 7. The engine is disposed in a rear part of the vehicle body 2. The power generated by the engine is transmitted to the left and right front wheels 5F via a differential gear of the power transmission mechanism 7. The differential gear is housed in a spherical portion 8B of the housing 8. In the following description, the spherical portion 8B of the housing 8 that houses the differential gear is appropriately referred to as an axle ball 8B. The axle ball 8B is disposed at the center in the vehicle width direction. In addition, the axle ball 8B is disposed below the bucket cylinder 14. An axle housing 8C, which is a cover of the axle ball 8B (housing 8), is provided above the axle ball 8B. The housing 8 includes a housing 8F for the front wheels 5F and a housing 8R for the rear wheels 5R (Fig. 5).

### [Installation Position of Road Surface Condition Monitoring System]

As shown in Fig. 1, a road surface condition monitoring system 100 according to the present embodiment includes a camera 20, a computer 30, a buzzer 40, and a monitor 50. The camera 20 is installed in the axle housing 8C, for example, as shown in Figs. 4 and 5. The computer 30, the buzzer 40, and the monitor 50 are installed in the cab 3.

### [Imaging Region of Camera]

As shown in Fig. 7, the camera 20 acquires image data of a region 401 between the bucket 12 and the front tire 6F. In the present embodiment, the imaging region of the camera 20 is the region 401 of the road surface RS between the front tire 6F and the bucket 12 in a ground contact state in contact with the road surface RS. The camera 20 is not limited to being installed in the axle housing 8C and may be installed in a boom connector 17 shown in Fig. 5, for example. The boom connector 17 is a member that connects the left and right arms 11 by welding. In addition, the number of the cameras 20 is not limited to one and may be a plurality. For example, as shown in Fig. 7, the camera can be attached to the back side of the bucket 12 (the upper surface of the bucket facing the cab 3) (camera 20a), attached to the top (camera 20b) or back (camera 20e) of a front fender 18, attached to the top, bottom, or side of lighting 19 (camera 20c), attached to the top 3a of the ceiling of the cab 3 (camera 20d), or attached to the cover of the housing 8R (camera 20f). The cameras 20 and 20a to 20f can be mounted on the wheel loader 1 via, for example, a bracket, and the bracket may be provided with an adjustment mechanism capable of adjusting the imaging direction. The cameras 20 and 20a to 20f shown in Fig. 7 are represented by two rectangles, and the imaging direction of each camera is from a large rectangle to a small rectangle.

The imaging region is not limited to the region 401, and for example, part or the entirety of a region 402, a region 403, and a region 404 may be used as the imaging region. The region 402 is a certain region behind the front tire 6F. The region 403 is a certain region in front of the rear tire 6R. The region 404 is a certain region behind the rear tire 6R. Each of the regions 401 to 404 can be a region including part of the tire 6 and part of the road surface RS. In addition, an imaging region of the camera may be provided for each of the left and right tires 6.

### [Configuration of Road Surface Condition Monitoring System]

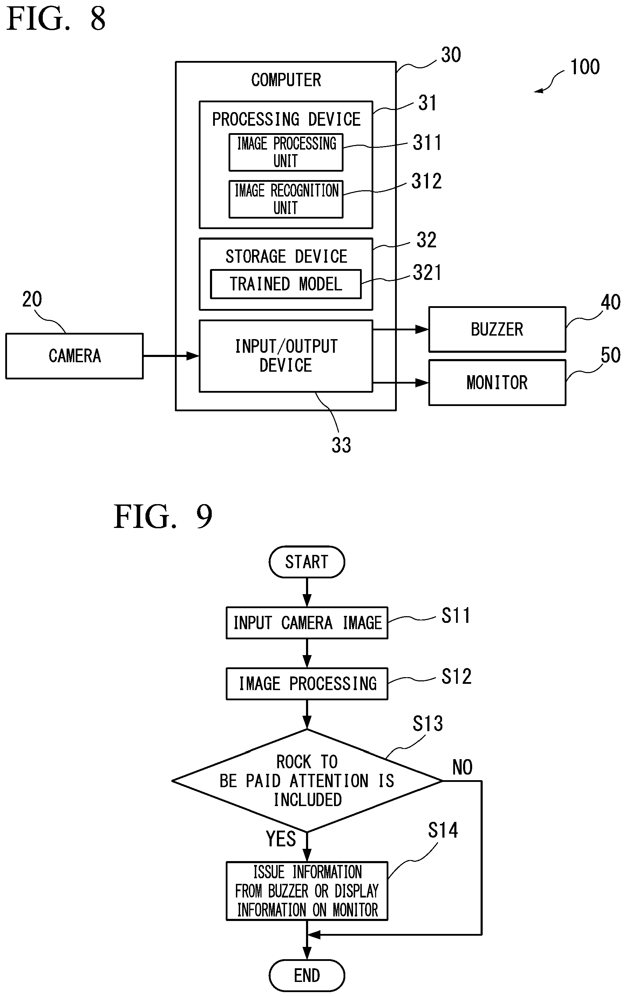

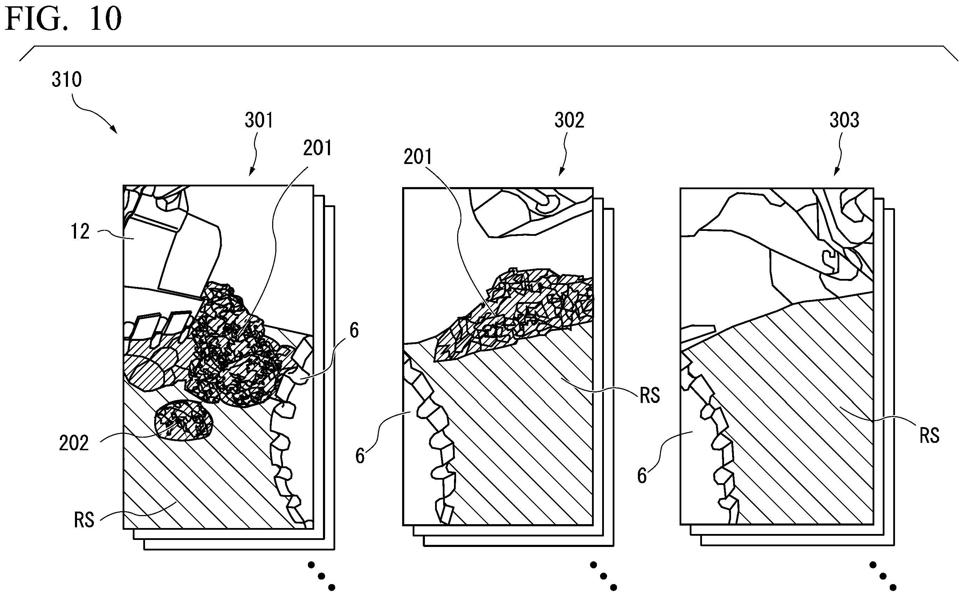

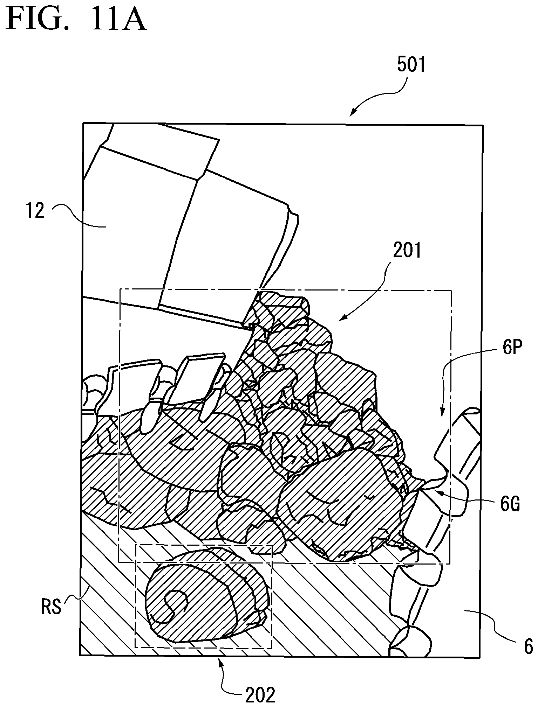

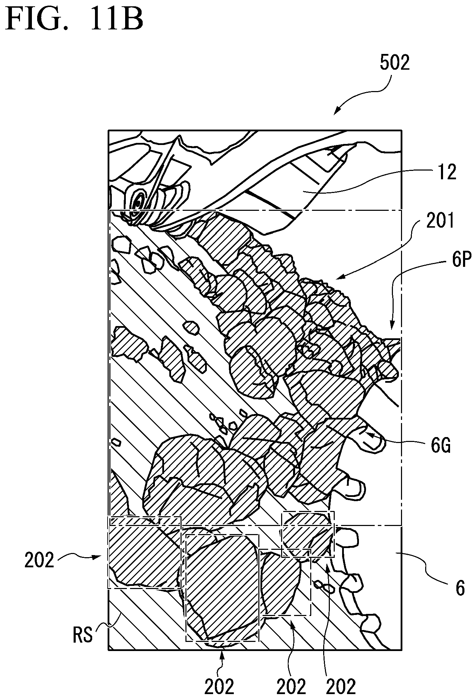

Next, the road surface condition monitoring system 100 shown in Fig. 1 will be described with reference to Fig. 8 to Figs. 11A and 11B. Fig. 8 is a block diagram showing an example of the road surface condition monitoring system 100 according to the present embodiment. Fig. 9 is a flowchart showing an operation example of the road surface condition monitoring system 100 shown in Fig. 8. Fig. 10 is a schematic diagram showing an example of an image for learning according to the present embodiment. Figs. 11A and 11B are schematic diagrams showing an example of a camera image according to the present embodiment.

As shown in Fig. 8, the road surface condition monitoring system 100 includes the camera 20, the computer 30, the buzzer 40, and the monitor 50 whose installation positions are described with reference to Fig. 1 and the like.

The computer 30 has a processing device 31, a storage device 32, and an input/output device 33. The processing device 31 includes hardware such as a central processing unit (CPU), a storage device, and an input/output device inside, and operates by executing, for example, a program stored in the internal storage device. The processing device 31 has an image processing unit 311 and an image recognition unit 312 as functional components composed of a combination of hardware and software such as a program. The storage device 32 stores a trained model 321 and the like used by the image recognition unit 312 in image recognition processing. The input/output device 33 inputs an image signal captured by the camera 20 and stores the input image signal in a predetermined storage device or outputs the input image signal to the image processing unit 311, superimposes, for example, an image signal indicating a predetermined determination result of the image recognition unit 312 on the input image signal and outputs the superimposed image signal to the monitor 50, or outputs a signal indicating a predetermined determination result of the image recognition unit 312 to the buzzer 40. That is, the input/output device 33 is a device that executes a transmission control of the image signal, a control of display contents displayed on the monitor 50 based on the image signal, and a control of sound contents output to the buzzer 40 based on the image signal.

The image processing unit 311 receives the image signal captured by the camera 20. The image signal is input to the image processing unit 311 via the input/output device 33, performs predetermined image processing (for example, resolution conversion and image quality adjustment), and stores the image-processed image signal in a predetermined storage device. The image recognition unit 312 receives the image-processed image signal by the image processing unit 311, determines whether or not the image captured by the camera 20 contains rocks or the like to be paid attention which may damage the tire 6, and decides information to be output from the buzzer 40 or the monitor 50 based on the determined result.

The camera 20 has a video camera function of acquiring moving image data in the imaging region 401. The image data (moving image data) acquired by the camera 20 is input to the input/output device 33.

The buzzer 40 as a sound output device outputs information according to a control signal output from the input/output device 33. The buzzer 40 generates, for example, an alarm sound audible to the operator in the cab 3. A speaker may be used instead of the buzzer 40, and sound may be output from the speaker by changing it to an alarm sound as information.

The monitor 50 is a display device such as a liquid crystal display or an organic electroluminescence display, and displays, for example, an image (moving image or still image) that can be visually recognized by the operator in the cab 3 according to the image signal output from the input/output device 33. The monitor 50 may use a display device such as a head-up display capable of displaying an image or information on a windshield of the cab 3. The monitor 50 may be a single display device or may be composed of a plurality of display devices. In addition, the display device and the sound output device may be integrated. For example, a liquid crystal display and a speaker may be integrated.

As shown in Fig. 1, the monitor 50 is disposed in the cab 3 of the vehicle body 2. The monitor 50 displays, for example, the moving image data acquired by the camera 20 in real time, or displays information according to the determination result of the image recognition unit 312. Although the operator of the cab 3 can visually recognize the bucket 12, the arm 11, the bucket cylinder 14, and the like via the windshield 53, it is difficult to visually recognize the condition of the road surface RS. In particular, it is difficult to directly visually check the condition of the road surface RS in front of the front tire 6F. In addition, when the bucket 12 is grounded, the condition of the road surface RS on a lower surface of the bucket 12 and the condition of the road surface RS in front of the bucket 12 are also difficult to be visually recognized by the operator of the cab 3. In any case, the condition of the road surface in front of the front tire 6 becomes less visible as it comes closer to the front tire 6. On the other hand, when the monitor 50 displays the moving image data acquired by the camera 20 in real time, the operator of the cab 3 views the monitor 50 provided in the cab 3 and can visually recognize, for example, the condition of the road surface RS (region 401) between the bucket 12 and the front tire 6F.

### [Operation of Road Surface Condition Monitoring System]

Next, an operation example of the road surface condition monitoring system 100 shown in Fig. 8 will be described with reference to Fig. 9. The process shown in Fig. 9 is repeatedly executed by the computer 30 at a predetermined cycle. When the process shown in Fig. 9 is started, the input/output device 33 acquires the image signal output by the camera 20 for one or a plurality of frames and stores the image signal in a predetermined storage device (Step S11). In Step S11, the input/output device 33 may perform, for example, a process of outputting the image signal input from the camera 20 to the monitor 50 as it is in response to an instruction from the image recognition unit 312. In this case, an image captured by the camera 20 can be displayed in real time on the monitor 50 in response to the instruction from the image recognition unit 312.

Next, the image processing unit 311 inputs the image signal stored in the predetermined storage device in Step S11, performs predetermined image processing thereon, and then stores the image signal in the predetermined storage device again (Step S12).

Next, the image recognition unit 312 executes image recognition processing on the image signal of one or a plurality of frames stored in the predetermined storage device, and determines whether or not the region 401 includes the rock 202 to be paid attention which may damage the tire 6 (Step S13). When the image recognition unit 312 determines in Step S13 that the rock 202 to be paid attention is included ("YES" in Step S13), the image recognition unit 312 outputs an instruction to the input/output device 33 to issue information (alarm sound) indicating the determination result from the buzzer 40 or to display information (alarm image) indicating the determination result on the monitor 50 (Step S14), to alert the operator, and the process shown in Fig. 9 ends. On the other hand, when the image recognition unit 312 does not determine in Step S13 that the rock 202 to be paid attention is included ("NO" in Step S13), the process shown in Fig. 9 ends.

Here, an example of the determination processing (image recognition processing) in Step S13 will be described. The determination processing by the image recognition unit 312 can be processing of determining whether the image signal to be determined is classified into an image containing a rock to be paid attention or an image not containing a rock to be paid attention, by using the trained model 321 stored in the storage device 32. The trained model 321 is a trained model using a neural network such as a convolution neural network (CNN) as an element, and weighting coefficients between neurons in each layer of the neural network are optimized by machine learning so that a solution obtained for a large number of input data is output. The trained model 321 is composed of, for example, a combination of a program that performs an operation from input to output and a weighting coefficient (parameter) used for the operation.

### [Generation of Trained Model]

The trained model 321 can be generated as follows, for example. That is, for example, as shown in Fig. 10, a plurality of pieces of image data 301 including the rock pile 201 and the rock 202 to be paid attention, a plurality of pieces of image data 302 including the rock pile 201 without the rock 202 to be paid attention, and a plurality of pieces of image data 303 including neither the rock pile 201 nor the rock 202 to be paid attention are prepared. Then, the plurality of pieces of image data 301 are defined as data including the rock 202 to be paid attention and the rock pile 201. In addition, the plurality of pieces of image data 302 are defined as data including the rock pile 201 without the rock 202 to be paid attention. In addition, the plurality of pieces of image data 303 are defined as data including neither the rock pile 201 nor the rock 202 to be paid attention. The defined plurality of pieces of image data 301, 302, and 303 are prepared as a data set 310 for learning. As described above, in the data set for learning 310, classification (labeling) such as the presence or absence of the rock 202 to be paid attention for each image data is linked as incidental information. The trained model 321 is generated by machine learning by supervised learning using the data set 310 for learning. In the example shown in Fig. 10, the pieces of image data 301 to 303 are all images including part of the tire 6 (block pattern 6P). In this case, it is considered that the size and orientation of the rock 202 can be easily grasped with reference to the tire 6 (block pattern 6P) as compared with a case where part of the tire 6 (block pattern 6P) is not included, and the learning accuracy can be improved. The initial classification (labeling) of the image data included in the data set 310 for learning can be performed, for example, manually or by image recognition processing such as pattern matching based on the conditions described below.

The rock 202 to be paid attention can be defined as, for example, a rock having a certain size or larger or a rock having a sharp edge angle, and defined as being in a case where it is assumed that the tire 6 is highly likely to be damaged when traveling toward the rock, based on the relative position and the relative orientation with respect to the tire 6. In addition, the rock 202 to be paid attention can be defined as a rock having a certain size or larger or a rock having a sharp edge angle and defined as being in a case where the position of the rock 202 does not exist on a slope of the rock pile 201 (or exists on a flat surface).

A rock smaller than a certain size has a high possibility of avoiding the damage by flexibility of the tire 6 and is not the rock to be paid attention, but the rock having a certain size or larger has a high possibility of causing the damage due to the weight of the wheel loader 1 when the wheel loader 1 goes over the rock. In addition, when a possibility of damaging the tire 6 is considered with respect to a rock having a round shape, the rock having a round shape has a low possibility of piercing the tire 6 or cutting the tire 6 and is not a rock to be paid attention.

The rock pile 201 is an object in which a plurality of rocks, earth, and the like are accumulated, and is an area to be worked by the work equipment 10, so that the tire 6 does not normally enter the rock pile 201. Therefore, the rock located on the slope of the rock pile 201 can be excluded from the rock 202 to be paid attention since it does not lie on the road surface RS. Note that the "rock pile" is merely one aspect of "an area where the tires of the work vehicle do not enter". For example, "rock loaded in a dump truck" may be defined as "an area where the tires of the work vehicle do not enter" in the same manner as the "rock pile". The fact that the rock does not exist on the slope of the rock pile 201 is used as a condition for determining the rock 202 to be paid attention. In this way, for example, when rocks are scattered all over a mine, it is possible to avoid determining that the rocks are the rock 202 to be paid attention, and as a result, it is possible to prevent unnecessary alarm from being issued.

As described above, in the data set 310 for learning used when the trained model 321 is constructed by machine learning, the condition relating to the size of the rock (monitoring object) or the shape of the rock (shape with a sharp edge angle) is included in the information for defining whether or not the image data includes the rock 202 to be paid attention, so that the image recognition unit 312 (damage determination unit) can use information on the shape or size of the rock (monitoring object) included in the image captured by the camera 20 as an element for the determination.

In addition, for the data set used when the trained model 321 is constructed by machine learning, the condition relating to the monitoring object information (relative position and relative orientation, or whether or not the position is on the slope of the rock pile 201) of the rock (monitoring object) with respect to the tire 6 is included in the information defining whether or not the image data includes the rock 202 to be paid attention, so that the image recognition unit 312 (damage determination unit) can use, as an element for the determination, information on the relative position and the relative orientation of the rock (monitoring object) and whether or not the rock is on the slope, with respect to the tire 6 included in the image captured by the camera 20.

In addition, in the data set used when the trained model 321 is constructed by machine learning, part of the tire 6 (block pattern 6P) is included, so that the image recognition unit 312 (damage determination unit) can use tire information on the shape of the block pattern 6P or the size of the block pattern 6P of the tire 6 as an element for the determination.

Regarding the data set 310 for learning, it is desirable to prepare the data set 310 for learning at night so that the determination processing can be performed even though an image in which a rock is illuminated by a light source mounted on the work vehicle is acquired during night work. In this case, this system functions effectively even during night work. In addition, the data set 310 for learning at night may be created based on an image that reproduces the appearance at night by performing image processing such as color tone correction based on an image acquired during daytime.

Due to the material characteristics of the tire, the tire is more susceptible to damage in rainy weather than in fine weather. For example, a first trained model 321 based on the data set for learning 310 in rainy weather and a second trained model 321 based on the data set for learning 310 other than in rainy weather may be prepared, and the second trained model 321 may be switched to the first trained model 321 in rainy weather (for example, a raindrop sensor). For example, when a raindrop sensor is installed outside the cab 3 and the raindrop sensor detects rainfall, a detection signal may be output to the computer 30, and switching from the second trained model to the first trained model may be performed by the input/output device 33 in response to the input of the detection signal.

The image of the data set for learning 310 may be artificially created by using software for creating computer graphics. In addition, the tire need not be reflected in the image of the data set for learning 310.

As the image recognition technique, any image recognition technique such as pattern matching can be used in addition to the trained model such as CNN. In addition, in the data set for learning, for example, an image generated by using the image generation technique such as auxiliary classifier generative adversarial Network (ACGAN) can be used.

### [Captured Image by Camera]

Figs. 11A and 11B are schematic diagrams showing an example of a captured image by the camera 20 according to the present embodiment. An image 501 shown in Fig. 11A includes the rock pile 201 surrounded by a chain line frame and one rock 202 surrounded by a broken line frame. The rock 202 shown in the example of this captured image is a rock to be paid attention for the damage to the tire 6 and exists on a flat surface (road surface RS). The image 501 (image-processed) is input to the trained model 321, so that the image recognition unit 312 can obtain the determination result that the image includes the rock 202 to be paid attention by using the trained model 321. In addition, an image 502 shown in Fig. 11B includes the rock pile 201 surrounded by a chain line frame and four rocks 202 surrounded by a broken line frame. The rock 202 shown in the example of this captured image is a rock to be paid attention for the damage to the tire 6 and exists on a flat surface (road surface RS). The image 502 (image-processed) is input to the trained model 321, so that the image recognition unit 312 can obtain the determination result that the image includes the rock 202 to be paid attention by using the trained model 321.

### [Effect of Road Surface Condition Monitoring System]

As described above, the road surface condition monitoring system 100 can identify whether or not the monitoring object is a rock to be paid attention by the image recognition technique by using the image captured by the in-vehicle camera 20 as an input to the computer 30. The rock to be paid attention in the present embodiment can be a rock having a certain size or larger, a rock with a sharp edge angle, a rock existing on a flat surface not on a rock pile, and the like. According to the present embodiment, when there is the rock to be paid attention, the buzzer 40 issues a warning and the monitor 50 displays a warning, and the operator can be alerted. When the operator receives the alert, the operator can take measures to prevent the front tire 6F from being damaged by viewing the moving image data displayed on the monitor 50. The operator can take measures to prevent the front tire 6F from being damaged by, for example, confirming that the rock 202 lies in front of the front tire 6F by viewing the moving image data displayed on the monitor 50 in accordance with the received alert, operating a brake to stop the wheel loader 1 or operating a steering to change the traveling direction of the wheel loader 1 so that the front tire 6F does not ride on the rock 202 to be paid attention.

According to the present embodiment, without looking the monitor 50 always or frequently, the operator need only view the monitor 50 when the rock 202 to be paid attention exists in the vicinity of the tire 6 and can perform an operation to surely avoid the damage to the tire 6. That is, according to the present embodiment, the operator can normally execute excavation work and the like without concentrating on the image of the camera 20 and can carefully execute the traveling operation and take necessary measures to avoid the tire damage only when the rock 202 to be paid attention comes closer to the tire 6. According to the present embodiment, it is possible to monitor the road surface condition even though the operator does not always or frequently view the monitor 50, and to improve workability and productivity.

### [Basic Configuration Example of Road Surface Condition Monitoring System]

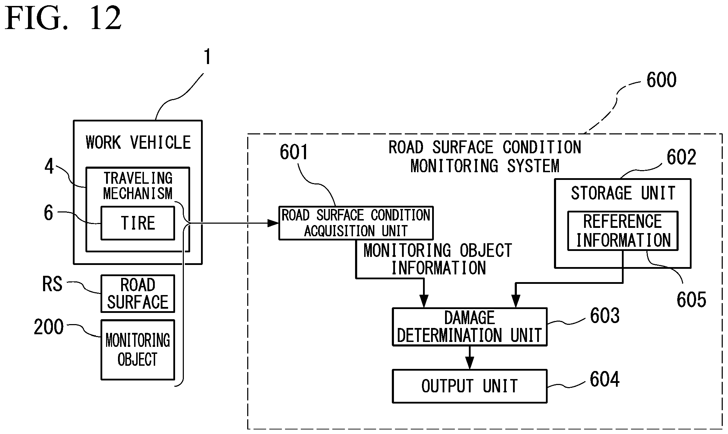

Next, with reference to Fig. 12, a basic configuration example of the embodiment including the above-described embodiment will be described. Fig. 12 is a block diagram showing the basic configuration example of the embodiment including the above-described embodiment. The same reference numerals are appropriately used for the same or corresponding configurations as those shown in Figs. 1 to Figs. 11A and 11B. Hereinafter, a basic configuration example of the embodiment including a modification example of the above-described embodiment will be described.

A road surface condition monitoring system 600 shown in Fig. 12 includes a road surface condition acquisition unit 601, a storage unit 602, a damage determination unit 603, and an output unit 604 as functional components composed of, for example, hardware such as a computer and its peripheral devices and software such as a program. In addition, the storage unit 602 stores reference information 605.

The road surface condition acquisition unit 601 acquires the monitoring object information on at least the shape or size of the monitoring object 200 existing in the area including the road surface RS in the direction in which the work vehicle 1 travels by driving of the traveling mechanism 4, which mounts a tire, of the work vehicle 1. The work vehicle 1 can be a tire-based work vehicle such as a wheel loader, a motor grader, or a dump truck. The monitoring object information may further include information on the relative position and the relative orientation of the monitoring object with respect to the tire 6. The monitoring object information may further include information on the existence position of the monitoring object with respect to the tire 6. The road surface condition acquisition unit 601 can be a camera (monocular, stereo, infrared ray), a radar scanner, or the like. The monitoring object is, for example, a rock. Note that holes in the road surface that cause the tire damage can also be monitored. In addition, when a wheel loader is operated at an industrial waste treatment plant, the object to be monitored may be a sharp metal object. Of course, even such a metal object may cause the tire damage. Further, the road surface is not limited to the soil road surface, but may be a road surface paved with asphalt or concrete.

The storage unit 602 stores the reference information 605 for determining whether or not the tire 6 is likely to be damaged. The reference information 605 is a trained model if the determination is made by artificial intelligence (AI), pattern data if the determination is made by image processing (pattern matching), waveform data if the determination is made by a radar scanner, and the like.

The damage determination unit 603 determines, based on the monitoring object information acquired by the road surface condition acquisition unit 601 and the reference information stored in the storage unit 602, whether the tire 6 is to be damaged when the tire 6 comes into contact with the monitoring object 200 by the driving of the traveling mechanism 4. The damage determination unit 603 may determine whether the tire is to be damaged by using the tire information on the shape of the block pattern or the size of the block pattern of the tire. The damage determination unit 603 makes the determination based on any of the determination by artificial intelligence (AI), the determination by pattern matching by image processing, the determination by analysis of a reception signal of a radar scanner, and the like.

Then, the output unit 604 outputs the result determined by the damage determination unit 603. When there are a plurality of the tires 6, the output unit 604 may output information indicating which tire 6 is to be damaged as a result of the determination by the damage determination unit 603. In this case, the road surface condition acquisition unit 601 may have a number corresponding to the number of the tires 6. The output unit 604 can perform a sound output from a speaker in the cab, an image output to a monitor, an output to a head-up display, an output by vibration of an operation lever, and the like.

In a remote operation of the work vehicle 1, the result determined by the damage determination unit 603 may be output to a place away from the work vehicle 1. The result output by the output unit 604 may be a result indicating that there is no risk of the tire damage due to an object. That is, the output unit 604 may output not only that there is an object on the road surface RS but also that there is no object on the road surface RS (having no sharp rock or hole or metal object that may damage the tire), and the output unit 604 outputs the result of the "road surface condition monitoring".

According to the road surface condition monitoring system 600 shown in Fig. 12, the road surface condition can be monitored even though the operator does not view the monitor always or frequently.

The output unit 604 may output a signal for controlling the brake of the work vehicle
1. When the damage determination unit 603 determines that the monitoring object may damage the tire 6, the brake of the work vehicle 1 can be automatically operated based on a signal transmitted from the output unit 604 to a brake device.

In addition, the output unit 604 may output a signal for controlling the steering of the work vehicle 1. When the damage determination unit 603 determines that the monitoring object may damage the tire 6, the actuator controls the steering based on a signal transmitted from the output unit 604 to the actuator. The work vehicle 1 can automatically turn in a direction to avoid damage to the tire 6 by controlling the steering of the work vehicle 1.

In addition, the output unit 604 may output a signal for controlling the engine speed of the work vehicle 1. When the damage determination unit 603 determines that the monitoring object may damage the tire 6, the output unit 604 outputs a signal for instructing reduction of the engine speed. The signal is transmitted to a controller that executes engine control, and the controller can reduce an output of the engine and reduce the speed of the work vehicle 1.

In addition, the output unit 604 may output a signal for controlling a posture of the bucket of the work vehicle 1. When the damage determination unit 603 determines that the monitoring object may damage the tire 6, a hydraulic valve that controls the operation of the work equipment 10 can automatically lower the bucket of the work vehicle 1 based on a signal transmitted from the output unit 604 to the hydraulic valve, to avoid the contact between the monitoring object and the tire 6.

The road surface condition monitoring system 600 may have all the configurations in the work vehicle 1, but for example, when the work vehicle 1 is provided with a device capable of being remotely operated and the work vehicle 1 is remotely operated, a configuration of part (for example, a display device or a sound output device connected to the output unit 604) of the output unit 604 or the like other than the road surface condition acquisition unit 601 may be provided at a remote location among the components of the road surface condition monitoring system 600. For example, it is assumed that the output unit 604 includes a display device (not shown) at a remote location. Information output from the output unit 604 is transmitted to a display device (not shown) at a remote location via wireless communication or the like, and the display device displays or outputs information (alarm) on the alert about the monitoring object to be paid attention. When the operator who executes the remote operation recognizes the display or output of the display device and confirms the monitoring object, the steering operation or brake operation of the work vehicle 1 can be executed by the remote operation such that the tire 6 of the work vehicle 1 does not come into contact with the monitoring object.

A vehicle speed sensor may be provided, and the output unit 604 receiving a signal indicating the vehicle speed of the work vehicle from the vehicle speed sensor may switch information for the alert according to the vehicle speed. For example, when the work vehicle travels at a high speed faster than a predetermined speed, the output unit 604 may output a warning with a high alarm level, and when the work vehicle 1 travels at a low speed lower than a predetermined speed, the output unit 604 may output a warning with a low alarm level.

The correspondence between the configuration of the embodiment described with reference to Figs. 1 and 8 and the configuration shown in Fig. 12 is as follows. The road surface condition monitoring system 100 shown in Figs. 1 and 8 corresponds to the road surface condition monitoring system 600 shown in Fig. 12. Part of the combination of the camera 20 and the input/output device 33 shown in Fig. 8 corresponds to the road surface condition acquisition unit 601 shown in Fig. 12. The image recognition unit 312 shown in Fig. 8 corresponds to the damage determination unit 603 shown in Fig. 12. The storage device 32 shown in Fig. 8 corresponds to the storage unit 602 shown in Fig. 12. The trained model 321 shown in Fig. 8 corresponds to the reference information 605 shown in Fig. 12. The combination of part of the input/output device 33, the buzzer 40, and the monitor 50 shown in Fig. 8 corresponds to the output unit 604 shown in Fig. 12. The rock 202 to be paid attention shown in Fig. 1 corresponds to the monitoring object 200 shown in Fig. 12.

Hereinabove, the embodiments of the invention have been described in detail with reference to the drawings. However, the specific configuration is not limited to those embodiments and also includes changes within the scope of the appended claims.

In addition, some or all of programs executed by a computer in the above embodiment can be distributed via a computer-readable recording medium or a communication line.

### [Industrial Applicability]

According to the disclosure of the present invention, the operator can easily monitor the road surface condition.

### [Reference Signs List]

1: Wheel loader (work vehicle)
2: Vehicle body
3: Cab
4: Traveling mechanism
5: Wheel
6: Tire
7: Power transmission mechanism
10: Work equipment
11: Arm
12: Bucket (excavation member)
12B: Teeth
13: Lift cylinder (hydraulic cylinder)
14: Bucket cylinder (hydraulic cylinder)
15: Bell crank
16: Link
20: Camera
30: Computer
31: Processing device
311: Image processing unit
312: Image recognition unit
32: Storage device
321: Trained model
33: Input/output device
40: Buzzer
50: Monitor
RS: Road surface
200: Monitoring object
100, 600: Road surface condition monitoring system
601: Road surface condition acquisition unit
602: Storage unit
603: Damage determination unit
604: Output unit
605: Reference information

## Claims

1. A road surface condition monitoring system comprising:
a road surface condition acquisition unit (601) configured to acquire monitoring object information on at least a shape or size of a monitoring object (200, 202) existing in an area including a road surface (RS) in a direction in which a work vehicle (1) travels by driving of a traveling mechanism (4) of the work vehicle (1), the traveling mechanism (4) mounting a tire (6);
a storage unit (602) configured to store reference information (605) for determining whether the tire (6) is to be damaged; and
an output unit (33, 604);
**characterized by**
a damage determination unit (603) configured to determine, before the tire (6) comes into contact with the monitoring object (200, 202), based on the monitoring object information and the reference information (605), whether the tire (6) is to be damaged when the tire (6) comes into contact with the monitoring object (200, 202) by the driving of the traveling mechanism (4); and in that
the output unit (33, 604) is configured to output a result determined by the damage determination unit (603).

2. The road surface condition monitoring system according to claim 1, wherein the monitoring object information further includes information on a relative position and relative orientation of the monitoring object (200, 202) with respect to the tire (6).

3. The road surface condition monitoring system according to claim 1 or 2, wherein the damage determination unit (603) is configured to determine whether the tire (6) is to be damaged using tire information on a shape of a block pattern (6P) of the tire (6) or a size of the block pattern (6P).

4. The road surface condition monitoring system according to any one of claims 1 to 3,
wherein a plurality of the tires (6) is provided, and
the result output by the output unit (33. 604) includes information indicating which of the tires (6) is to be damaged.

5. A work vehicle comprising:
a traveling mechanism (4);
a tire (6) mounted on the traveling mechanism (4); and
a road surface condition monitoring system (100, 600) according to any of claims 1 to 4.

6. A road surface condition monitoring method for monitoring a condition of a road surface (RS) in contact with a tire (6) mounted on a traveling mechanism (4) of a work vehicle (1), the method comprising:
a step (S11, S12) of acquiring monitoring object information on at least a shape or size of a monitoring object (200, 202) existing in an area including the road surface (RS) in a direction in which the work vehicle (1) travels by driving of the traveling mechanism (4);
a step (S13) of determining, before the tire (6) comes into contact with the monitoring object (200, 202), based on the monitoring object information and reference information (605) for determining whether the tire (6) is to be damaged, whether the tire (6) is to be damaged when the tire (6) comes into contact with the monitoring object (200, 202) by the driving of the traveling mechanism (4); and
a step (S14) of outputting the determined result.

7. A program causing a computer (30) for monitoring a condition of a road surface (RS) in contact with a tire (6) mounted on a traveling mechanism (4) of a work vehicle (1) to execute
a step (S11, S12) of acquiring monitoring object information on at least a shape or size of a monitoring object (200, 202) existing in an area including the road surface (RS) in a direction in which the work vehicle (1) travels by driving of the traveling mechanism (4),
a step (S13) of determining, before the tire (6) comes into contact with the monitoring object (200, 202), based on the monitoring object information and reference information (605) for determining whether the tire (6) is to be damaged, whether the tire (6) is to be damaged when the tire (6) comes into contact with the monitoring object (200, 202) by the driving of the traveling mechanism (4), and
a step (S14) of outputting the determined result.

## Patentansprüche

1. Straßenoberflächen-Zustandsüberwachungssystem, umfassend:
eine Straßenoberflächenzustands-Erfassungseinheit (601), die so konfiguriert ist, dass sie Überwachungsobjekt-Informationen über mindestens eine Form oder Größe eines Überwachungsobjekts (200, 202) erfasst, das in einem Bereich vorhanden ist, der eine Straßenoberfläche (RS) in einer Richtung enthält, in der ein Arbeitsfahrzeug (1) fährt, indem ein Fahrmechanismus (4) des Arbeitsfahrzeugs (1) angetrieben wird, wobei der Fahrmechanismus (4) einen Reifen (6) montiert hat;
eine Speichereinheit (602), die so konfiguriert ist, dass sie Referenzinformationen (605) speichert, um zu bestimmen, ob der Reifen (6) beschädigt wird; und
eine Ausgabeeinheit (33, 604);
**gekennzeichnet durch**
eine Schadensbestimmungseinheit (603), die so konfiguriert ist, dass sie, bevor der Reifen (6) mit dem Überwachungsobjekt (200, 202) in Kontakt kommt, auf der Grundlage der Überwachungsobjektinformationen und der Referenzinformationen (605) bestimmt, ob der Reifen (6) beschädigt wird, wenn der Reifen (6) durch den Antrieb des Fahrmechanismus (4) mit dem Überwachungsobjekt (200, 202) in Kontakt kommt; und **dadurch, dass**
die Ausgabeeinheit (33, 604) so konfiguriert ist, dass sie ein von der Schadensbestimmungseinheit (603) bestimmtes Ergebnis ausgibt.

2. Straßenoberflächen-Zustandsüberwachungssystem nach Anspruch 1, wobei die Überwachungsobjektinformationen ferner Informationen über eine relative Position und eine relative Ausrichtung des Überwachungsobjekts (200, 202) in Bezug auf den Reifen (6) umfassen.

3. Straßenoberflächen-Zustandsüberwachungssystem nach Anspruch 1 oder 2, wobei die Schadensbestimmungseinheit (603) konfiguriert ist, um unter Verwendung von Reifeninformationen über eine Form eines Blockmusters (6P) des Reifens (6) oder eine Größe des Blockmusters (6P) zu bestimmen, ob der Reifen (6) beschädigt wird.

4. Straßenoberflächen-Zustandsüberwachungssystem nach einem der Ansprüche 1 bis 3, wobei eine Vielzahl von Reifen (6) vorgesehen ist, und
das von der Ausgabeeinheit (33. 604) ausgegebene Ergebnis Informationen enthält, die angeben, welcher der Reifen (6) beschädigt wird.

5. Arbeitsfahrzeug, umfassend:
einen Fahrmechanismus (4);
einen an dem Fahrmechanismus (4) montierten Reifen (6); und
ein Straßenoberflächen-Zustandsüberwachungssystem (100, 600) nach einem der Ansprüche 1 bis 4.

6. Straßenoberflächenzustandsüberwachungsverfahren zum Überwachen eines Zustands einer Straßenoberfläche (RS) in Kontakt mit einem Reifen (6), der auf einem Fahrmechanismus (4) eines Arbeitsfahrzeugs (1) montiert ist, wobei das Verfahren umfasst:
einen Schritt (S11, S12) des Erfassens von Überwachungsobjektinformationen über mindestens eine Form oder Größe eines Überwachungsobjekts (200, 202), das in einem Bereich vorhanden ist, der die Straßenoberfläche (RS) in einer Richtung einschließt, in der sich das Arbeitsfahrzeug (1) durch den Antrieb des Fahrmechanismus (4) bewegt;
einen Schritt (S13) des Bestimmens, bevor der Reifen (6) mit dem Überwachungsobjekt (200, 202) in Kontakt kommt, basierend auf der Überwachungsobjektinformation und der Referenzinformation (605) zum Bestimmen ob der Reifen (6) beschädigt wird, ob der Reifen (6) beschädigt wird wenn der Reifen (6) mit dem Überwachungsobjekt (200, 202) durch den Antrieb des Fahrmechanismus (4) in Kontakt kommt; und
einen Schritt (S14) des Ausgebens des bestimmten Ergebnisses.

7. Programm, das einen Computer (30) zum Überwachen eines Zustands einer Straßenoberfläche (RS) in Kontakt mit einem Reifen (6), der auf einem Fahrmechanismus (4) eines Arbeitsfahrzeugs (1) montiert ist, veranlasst,
auszuführen: einen Schritt (S11, S12) des Erfassens von Überwachungsobjektinformationen über mindestens eine Form oder Größe eines Überwachungsobjekts (200, 202), das in einem Bereich vorhanden ist, der die Straßenoberfläche (RS) in einer Richtung umfasst, in der sich das Arbeitsfahrzeug (1) durch den Antrieb des Fahrmechanismus (4) bewegt,
einen Schritt (S13) des Bestimmens, bevor der Reifen (6) in Kontakt mit dem Überwachungsobjekt (200, 202) kommt, basierend auf der Überwachungsobjektinformation und der Referenzinformation (605) zum Bestimmen ob der Reifen (6) beschädigt wird, ob der Reifen (6) beschädigt wird wenn der Reifen (6) in Kontakt mit dem Überwachungsobjekt (200, 202) durch den Antrieb des Fahrmechanismus (4) kommt, und
einen Schritt (S14) des Ausgebens des bestimmten Ergebnisses.

## Revendications

1. Système de surveillance de l'état de la surface d'une route comprenant :
une unité d'acquisition (601) de l'état de la surface d'une route configurée pour acquérir des informations d'objet de surveillance sur au moins une forme ou une taille d'un objet de surveillance (200, 202) existant dans une zone incluant une surface d'une route (RS) dans une direction dans laquelle un véhicule de travail (1) se déplace par entraînement d'un mécanisme de déplacement (4) du véhicule de travail (1), le mécanisme de déplacement (4) montant un pneu (6) ;
une unité de stockage (602) configurée pour stocker des informations de référence (605) permettant de déterminer si le pneu (6) doit être endommagé ; et
une unité de sortie (33, 604) ;
**caractérisé par**
une unité de détermination des dégâts (603) configurée pour déterminer, avant que le pneu (6) n'entre en contact avec l'objet de surveillance (200, 202), sur la base des informations d'objet de surveillance et des informations de référence (605), si le pneu (6) doit être endommagé lorsque le pneu (6) entre en contact avec l'objet de surveillance (200, 202) par l'entraînement du mécanisme de déplacement (4) ; et en ce que
l'unité de sortie (33, 604) est configurée pour émettre un résultat déterminé par l'unité de détermination des dégâts (603).

2. Système de surveillance de l'état de la surface d'une route selon la revendication 1, dans lequel les informations d'objet de surveillance incluent en outre des informations sur une position relative et une orientation relative de l'objet de surveillance (200, 202) par rapport au pneu (6).

3. Système de surveillance de l'état de la surface d'une route selon la revendication 1 ou 2, dans lequel l'unité de détermination des dégâts (603) est configurée pour déterminer si le pneu (6) doit être endommagé en utilisant des informations sur le pneu concernant une forme d'un motif de bloc (6P) du pneu (6) ou une taille du motif de bloc (6P).

4. Système de surveillance de l'état de la surface d'une route selon l'une quelconque des revendications 1 à 3,
dans lequel une pluralité de pneus (6) est prévue, et
le résultat émis par l'unité de sortie (33, 604) inclut des informations indiquant lequel des pneus (6) doit être endommagé.

5. Véhicule de travail comprenant :
un mécanisme de déplacement (4) ;
un pneu (6) monté sur le mécanisme de déplacement (4) ; et
un système de surveillance de l'état de la surface d'une route (100, 600) selon l'une quelconque des revendications 1 à 4.

6. Procédé de surveillance de l'état de la surface d'une route (RS) en contact avec un pneu (6) monté sur un mécanisme de déplacement (4) d'un véhicule de travail (1), le procédé comprenant :
une étape (S11, S12) d'acquisition d'informations d'objet de surveillance sur au moins une forme ou une taille d'un objet de surveillance (200, 202) existant dans une zone incluant la surface d'une route (RS) dans une direction dans laquelle le véhicule de travail (1) se déplace par entraînement du mécanisme de déplacement (4) ;
une étape (S13) consistant à déterminer, avant que le pneu (6) n'entre en contact avec l'objet de surveillance (200, 202), sur la base des informations d'objet de surveillance et des informations de référence (605) permettant de déterminer si le pneu (6) doit être endommagé, si le pneu (6) doit être endommagé lorsque le pneu (6) entre en contact avec l'objet de surveillance (200, 202) par l'entraînement du mécanisme de déplacement (4) ; et
une étape (S14) de sortie du résultat déterminé.

7. Programme permettant à un ordinateur (30) de surveiller l'état de la surface de route (RS) en contact avec un pneu (6) monté sur un mécanisme de déplacement (4) d'un véhicule de travail (1) d'exécuter
une étape (S11, S12) d'acquisition d'informations d'objet de surveillance sur au moins une forme ou une taille d'un objet de surveillance (200, 202) existant dans une zone incluant la surface d'une route (RS) dans une direction dans laquelle le véhicule de travail (1) se déplace en entraînant le mécanisme de déplacement (4),
une étape (S13) consistant à déterminer, avant que le pneu (6) n'entre en contact avec l'objet de surveillance (200, 202), sur la base des informations d'objet de surveillance et des informations de référence (605) permettant de déterminer si le pneu (6) doit être endommagé, si le pneu (6) doit être endommagé lorsque le pneu (6) entre en contact avec l'objet de surveillance (200, 202) par l'entraînement du mécanisme de déplacement (4), et
une étape (S14) de sortie du résultat déterminé.
